# EUROPÄISCHE PATENTSCHRIFT

(11) **EP 0 799 751 B1**
(45) Veröffentlichungstag und Bekanntmachung des Hinweises auf die Patenterteilung: **23.06.1999**
(21) Anmeldenummer: 97104411.0
(22) Anmeldetag: 14.03.1997
(51) Int. Cl.: B60R 22/30, A44B 11/25

(54) **Gurtversteller für ein Fahrzeug-Sicherheitsgurtsystem**
Device for adjusting a safety belt for a vehicle
Dispositif pour ajuster une ceinture de sécurité pour véhicule

(30) Priorität: 04.04.1996 DE 29606294 U
(43) Veröffentlichungstag der Anmeldung: 08.10.1997
(73) Patentinhaber: TRW Occupant Restraint Systems GmbH & Co. KG, 73551 Alfdorf (DE)
(72) Erfinder: Wier, Franz, 73571 Göggingen (DE); Schneider, Edgar, 73529 Schwäbisch Gmünd-Bettringen (DE); Haas, Peter, 73571 Göggingen (DE)
(74) Vertreter: Degwert, Hartmut, Dipl.-Phys.

(56) Entgegenhaltungen:
- DE-U- 8 527 732
- FR-A- 2 441 542
- FR-A- 2 448 909
- US-A- 4 878 272
- US-A- 5 020 193

## Beschreibung

Die Erfindung betrifft einen Gurtversteller für ein Fahrzeug-Sicherheitsgurtsystem gemäß dem Oberbegriff des Anspruchs 1.

Mit einem solchen Gurtversteller wird die beispielsweise zwischen einem Beschlagteil und dem Gurtversteller zur Verfügung stehende lange des Gurtbandes an den jeweiligen Bedarf angepaßt. Der Gurtversteller soll dabei zum einen eine möglichst einfache Einstellung der lange des sich zwischen dem Gurtversteller und dem Beschlagteil erstreckenden, lastseitigen Abschnittes des Gurtbandes ermöglichen und zum anderen dann, wenn keine Verstellung gewünscht ist und auf das Gurtband eine Zugbelastung aufgebracht wird, das Gurtband sicher festlegen, so daß das freie Ende des Gurtbandes nicht durch den Gurtversteller hindurchgezogen werden kann. Problematisch ist bei solchen Gurtverstellern, daß die zum Festlegen des Gurtbandes erforderliche Klemmwirkung auf das Gurtband auch zu einer Schwächung des Gurtbandes an der Klemmstelle führt.

Aus der DE 29 05 832 C2, die dem Oberbegriff des Anspruchs 1 entspricht ist ein Gurtversteller bekannt, der einen mit einer Nut versehenen Sperrsteg aufweist. Im Belastungsfall wird der vom Gurtband umschlungene Sperrsteg in Richtung auf eine Klemmkante gezogen, und das Gurtband wird zwischen dem Sperrsteg und der Klemmkante eingeklemmt. Trotz Verrundungen an den klemmenden Teilen ergibt sich im Belastungsfall eine Quetschung des Gurtbandes mit einer daraus resultierenden hohen linienförmigen Belastung.

Ferner zeigt die DE 85 27 732 einen Gurtversteller, bei dem das Gurtband mittels eines federbelasteten Betätigungselementes zwischen zwei Klemmteilen gehalten ist. Nachteilig ist bei dieser Ausführung, daß das Gurtband auch im unbelasteten Zustand einer Linienberührung unterworfen ist.

Aufgabe der Erfindung ist es daher, einen Gurtversteller zu schaffen, der bei Belastung des Gurtbandes ein sicheres Festklemmen gewährleistet und der durch eine materialschonende Umlenkung des Gurtbandes sowohl im unbelasteten Zustand als auch im Belastungsfall örtliche Spannungsspitzen im Gurtband aufgrund von Klemmkanten vermeidet.

Diese Aufgabe wird durch einen Gurtversteller für ein Fahrzeug-Sicherheitsgurtsystem mit dem kennzeichnendem Merkmalen des Anspruchs 1 gelöst. Durch diese Gestaltung des erfindungsgemäßen Gurtverstellers ergibt sich zum einen ein besonders einfaches Verstellen des Gurtbandes, da während des Verstellvorganges das Gurtband weder mit der Anlagefläche noch mit der Klemmfläche in Berührung kommt, und zum anderen eine sehr gute Klemmwirkung ohne eine Schwächung des Gurtbandes, da die relativ zur Ebene der Durchtrittsöffnung geneigte Anlagefläche zusammen mit der Klemmfläche und der Umsehlingung des Umlenkstegs durch das Gurtband für eine optimale Ableitung einer in dem Gurtband wirkenden Zugkraft in den Gurtversteller sorgt.

Vorteilhalte Ausgestaltungen der Erfindung sind in den Unteransprüchen gegeben.

Die Erfindung wird nachfolgend unter Bezugnahme auf eine bevorzugte Ausführungsform beschrieben, die in der Zeichnung dargestellt ist. In dieser zeigen:
- Figur 1 einen schematischen Querschnitt durch einen erfindungsgemäßen Gurtversteller in einem ersten Zustand;
- Figur 2 eine vergrößerte Teilansicht von Figur 1; und
- Figur 3 eine Ansicht entsprechend derjenigen von Figur 2, wobei sich der Gurtversteller in einem zweiten Zustand befindet.

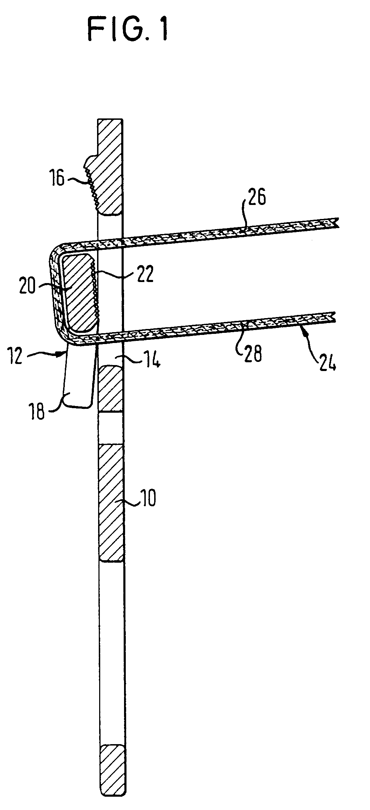

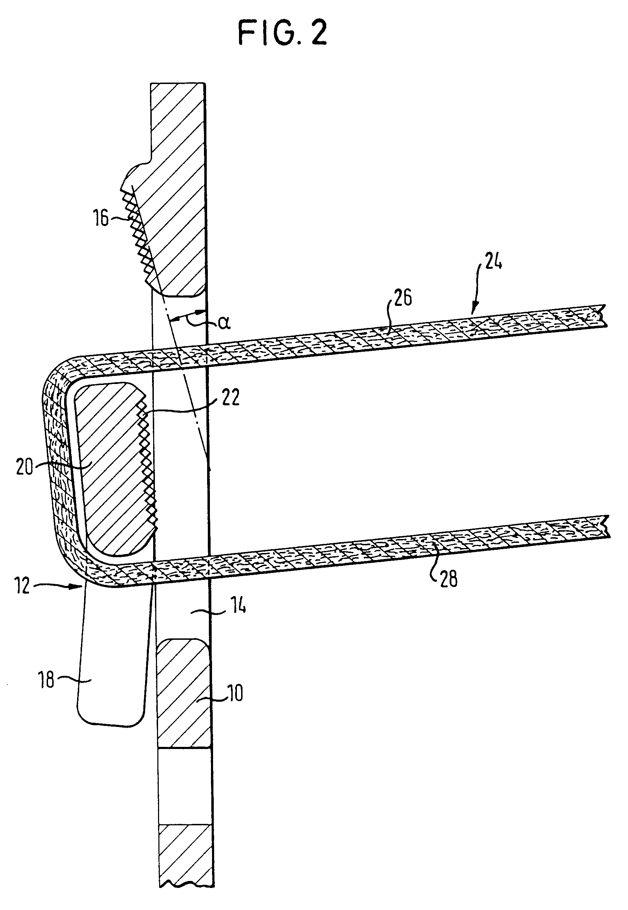

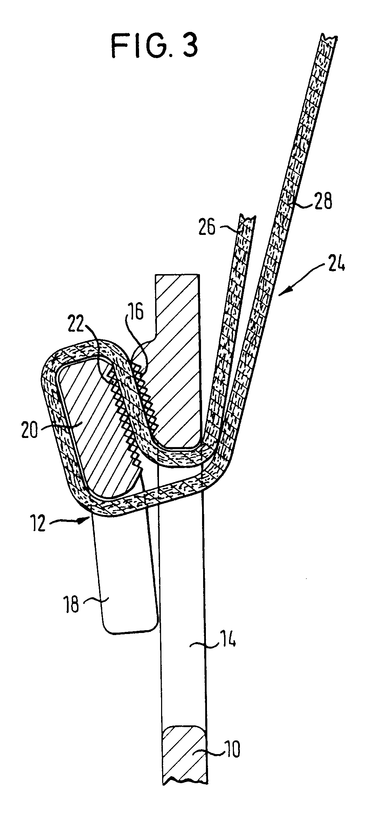

In den Figuren 1 bis 3 ist eine bevorzugte Ausführungsform eines erfindungsgemäßen Gurtverstellers dargestellt, wobei in den Figuren 1 und 2 der Gurtversteller in einem ersten Zustand gezeigt ist, in dem eine Verstellung der Länge des sich zwischen beispielsweise einem Beschlagteil und dem Gurtversteller erstreckenden, lastseitigen Abschnittes eines Gurtbandes möglich ist, und in Figur 3 in einem zweiten Zustand, in dem das Gurtband festgeklemmt ist.

Der erfindungsgemäße Gurtversteller besteht aus einem Halteteil 10 und einem Arretierteil 12. Das Halteteil weist eine Durchtrittsöffnung 14 für das Gurtband und angrenzend an einen Rand dieser Durchtrittsöffnung 14 eine Anlagefläche 16 auf, die relativ zu der Ebene der Durchtrittsöffnung um einen Winkel α geneigt ist, der vorzugsweise z.B. etwa 15° beträgt.

Das Arretierteil 12 weist einen Abstützabschnitt 18 und einen Umlenksteg 20 auf, auf dessen dem Halteteil 10 zugewandten Seite eine Klemmfläche 22 gebildet ist. Der Abstützabschnitt 18 und die Klemmfläche 22 erstrecken sich in zueinander geneigten Ebenen, die auf der dem Halteteil 10 abgewandten Seite einen Winkel zwischen etwa 160° und etwa 175°, vorzugsweise von etwa 170°, einschließen. Die Oberfläche der Anlagefläche 16 und/oder die Oberfläche der Klemmfläche 22 ist geriffelt bzw. strukturiert.

Das Gurtband 24 des Fahrzeug-Sicherheitsgurtsystems verläuft durch die Durchtrittsöffnung 14 hindurch, um den Umlenksteg 20 herum und zurück durch die Durchtrittsöffnung 14. Dabei durchquert das freie Ende 26 des Gurtbandes 24 die Durchtrittsöffnung 14 zwischen dem anlageflächenseitigen Rand der Durchtrittsöffnung 14 und dem lastseitigen Abschnitt 28 des Gurtbandes 24.

Bei dem in den Figuren 1 und 2 dargestellten Zustand des erfindungsgemäßen Gurtverstellers umschlingt das Gurtband 24 den Umlenksteg 20, ohne mit der Anlagefläche 16 oder der Klemmfläche 22 in Berührung zu gelangen. Dadurch kann die Länge des lastseitigen Abschnittes 28 des Gurtbandes besonders einfach an die jeweiligen Erfordernisse angepaßt werden, indem beispielsweise durch Ziehen am freien Ende 26 des Gurtbandes 24 überschüssige Gurtbandlänge zwischen einem Beschlagteil und dem Gurtversteller herausgezogen wird.

In Figur 3 ist der erfindungsgemäße Gurtversteller in einem zweiten Zustand gezeigt, in dem das Gurtband 24 sicher an dem Gurtversteller festgelegt ist. Durch eine Zugbelastung des lastseitigen Abschnittes 28 des Gurtbandes 24 in einer geeigneten Richtung relativ zum Gurtversteller ist das Arretierteil 12 relativ zu dem Halteteil 10 so verschoben worden, daß die Klemmfläche 22 des Arretierteils 12 gegenüber der Anlagefläche 16 des Halteteils 10 liegt. Aufgrund der Neigung der Anlagefläche 16 relativ zur Ebene der Durchtrittsöffnung 14 und aufgrund der Neigung der Klemmfläche 22 relativ zur Ebene des Abstützabschnittes 18 ergibt sich ein besonders vorteilhafter Gleichgewichtszustand für das Arretierteil 12. Bei einer Zugbelastung des lastseitigen Abschnittes 28 des Gurtbandes 24 führt die Umschlingungsreibung zwischen dem Gurtband 24 und dem Umlenksteg 20 zu einer Beaufschlagung der Klemmfläche 22 hin zur Anlagefläche 16. Durch diese Beaufschlagung wird das Gurtband 24 zwischen der Anlagefläche 16 und der Klemmfläche 22 sicher festgeklemmt, wobei jedoch aufgrund der Umschlingungsreibung zwischen Gurtband 24 und Umlenksteg 20 die im Bereich der Klemmwirkung zwischen der Anlagefläche 16 und der Klemmfläche 22 auf das Gurtband wirkende Zugkraft so weit vermindert ist, daß die Klemmwirkung zu keiner Schwächung des Gurtbandes führt.

Die sich bei dem erfindungsgemäßen Gurtversteller ergebende Klemmwirkung zwischen der Anlagefläche 16 und der Klemmfläche 22 ist so groß, daß Gurtband mit ungedrehten Kettfäden oder mit einer reibungsmindernden Beschichtung verwendet werden kann, ohne daß es zu Einbußen hinsichtlich der Klemmsicherheit kommt. Außerdem kann Gurtband mit geringerer Zugfestigkeit verwendet werden, da es aufgrund der besonders schonenden Klemmung zu keiner Schwächung des Gurtbandes zwischen der Anlagefläche 16 und der Klemmfläche 22 kommt.

## Patentansprüche

1. Gurtversteller für ein Fahrzeug-Sicherheitsgurtsystem, mit einem Halteteil (10), das eine Durchtrittsöffnung (14) für das Gurtband (24) und angrenzend an diese eine Anlagefläche (16) aufweist, und einem relativ zu dem Halteteil (10) beweglichen Arretierteil (12), das einen Abstützabschnitt (18) sowie einen Umlenksteg (20) aufweist, auf dessen dem Halteteil (10) Zugewandter Seite eine Klemmfläche (22) gebildet ist, wobei das Gurtband (24) durch die Durchtrittsöffnung (14) hindurch, um den Umlenksteg (20) herum und zurück durch die Durchtrittsöffnung (14) verläuft und das freie Ende (26) des Gurtbandes (24) die Durchtrittsöffnung (14) zwischen dem anlageflächenseitigen Rand der Durchtrittsöffnung (14) und dem lastseitigen Abschnitt (28) des Gurtbandes (24) durchquert,
dadurch gekennzeichnet, daß die Anlagefläche (16) gegenüber der Ebene der Durchtrittsöffnung (14) um einen Winkel (α) von etwa 15° geneigt ist, wobei sich der Abstützabschnitt (18) und die Klemmfläche (22) in zueinander geneigten Ebenen erstrecken, die auf der dem Halteteil (14) abgewandten Seite einen Winkel zwischen etwa 160° und etwa 175° einschließen.

2. Gurtversteller nach Anspruch 1, dadurch gekennzeichnet, daß die Oberfläche der Anlagefläche (16) und/oder der Klemmfläche (22) strukturiert ist.

3. Gurtversteller nach Anspruch 2, dadurch gekennzeichnet, daß die Oberfläche der Anlagefläche (16) und/oder der Klemmfläche (22) geriffelt ist.

## Claims

1. A belt adjusting device for a vehicle safety belt system, comprising a holding part (10) which has a through opening (14) for the belt webbing (24) and, adjacent to the through opening, a contact surface (16), and an arresting part (12) which is movable relative to the holding part (10) and which has a supporting section (18) and a deflection bridge (20), on the side of which facing the holding part (10) a clamping surface (22) is formed, the belt webbing (24) running through the through opening (14), around the deflection bridge (20) and back through the through opening (14), and the free end (26) of the belt webbing (24) passing through the through opening (14) between the edge of the through opening (14) on the side of the contact surface and the load side section (28) of the belt webbing (24),
characterized in that the contact surface (16) is inclined in relation to the plane of the through opening (14) by an angle (α) of approximately 15°, the supporting section (18) and the clamping surface (22) extending in planes which are inclined to each other and which include an angle of between approximately 160° and approximately 175° on the side facing away from the holding part (10).

2. The belt adjusting device according to claim 1, characterized in that the surface of the contact surface (16) and/or the clamping surface (22) is structured.

3. The belt adjusting device according to claim 2, characterized in that the surface of the contact surface (16) and/or the clamping surface (22) is corrugated.

## Revendications

1. Dispositif de réglage de ceinture pour un système de ceinture de sécurité de véhicule, comprenant une pièce de retenue (10) pourvue d'une ouverture de passage (14) pour la sangle de ceinture (24) et d'une surface d'appui adjacente (16) et comprenant une pièce d'arrêt (12) qui est mobile par rapport à la pièce de retenue (10) et qui comporte une portion de support (18) ainsi qu'une barrette de déviation (20) dont la face tournée vers la pièce de retenue (10) est pourvue d'une surface de blocage (22), la sangle de ceinture (24) traversant l'ouverture de passage (14), s'enroulant autour de la barrette de déviation (20) et ressortant par l'ouverture de passage (14), et l'extrémité libre (26) de la sangle de ceinture (24) traversant l'ouverture de passage (14) entre le bord de l'ouverture de passage (14) situé côté surface d'appui et la portion (28) de la sangle de ceinture (24) située côté charge,
caractérisé en ce que la surface d'appui (16) est inclinée d'un angle (α) d'environ 15° par rapport au plan de l'ouverture de passage (14), la portion de support (18) et la surface de blocage (22) s'étendant dans des plans qui sont inclinés l'un par rapport à l'autre et qui, sur la face située à l'opposé de la pièce de retenue (10), forment un angle compris entre environ 160° et environ 175°.

2. Dispositif de réglage de ceinture selon la revendication 1, caractérisé en ce que la partie superficielle de la surface d'appui (16) et/ou de la surface de blocage (22) est structurée.

3. Dispositif de réglage de ceinture selon la revendication 2, caractérisé en ce que la partie superficielle de la surface d'appui (16) et/ou de la surface de blocage (22) est striée.
